Europäisches Patentamt

European Patent Office

Office européen des brevets

(19)

(11) Publication number: **0 232 598**
A2

(12) # EUROPEAN PATENT APPLICATION

(21) Application number: **86309118.7**

(22) Date of filing: **21.11.86**

(51) Int. Cl.⁴: **B 60 S 1/38**

(30) Priority: **04.02.86 AU 4430/86**
**12.03.86 AU 4990/86**
**21.07.86 AU 60398/86**

(43) Date of publication of application: **19.08.87**
**Bulletin 87/34**

(84) Designated Contracting States: **AT BE CH DE FR GB IT LI LU NL SE**

(71) Applicant: **Sussich, Marino Robert, 316 Blackshaws Road, Altona North Victoria 3025 (AU)**

(72) Inventor: **Sussich, Marino Robert, 316 Blackshaws Road, Altona North Victoria 3025 (AU)**

(74) Representative: **Lambert, Hugh Richmond et al, D. YOUNG & CO. 10 Staple inn, London, WC1V 7RD (GB)**

(54) Wiper refill.

(57) A wiper blade refill assembly for the wiper arm of a motor vehicle windscreen and other wipers is provided comprising two preferably flared blade members (1, 1') mounted in parallel adjacent one another on a support or base member (2), the two blade members defining therebetween a substantially closed U-shaped channel, which when the wiper is in use with the blades in contact with the surface to be wiped, define a substantially enclosed tubular space or void between the wiper blades and the surface being wiped, thereby improving contact between the blades and the surface, and preventing lift-off.

ACTORUM AG

WIPER REFILL

The present invention relates to automated wipers.

There are many well known types of automated wipers. Perhaps the best known type are windscreen wipers for vehicles. These are commonly used on at least the front windscreen of all mass produced automobiles.

In general terms most automated wipers include three main parts as follows:

1. A motor.
2. An arm member.
3. A wiper refill which comprises a plastic backing and a blade member (i.e. a wiping rubber or wiping flare).

A problem associated with automated wipers is that they may tend not to be very effective against heavy dirt or fog and many repetitions of the wiper are required. To alleviate this problem there recently has been a development of multibladed automated wipers. These wipers generally comprise dual wiper refills and include a forked arm member or dual arm members adapted to receive known wiper refills. In theory when such wipers are in use the blade of the leading wiper refill removes the bulk of the material to be removed from the surface to be cleaned and the blade of the trailing wiper refill removes substantially any material that the blade of the leading refill does not remove.

Another problem associated with automated wipers is that when they are in use, the surface of the wiper blade or blades adapted to remove water and the like from a surface tends to separate (i.e. lift) from the surface. Many attempts have involved adaption of the arm member or the addition of an aerofoil type member to the arm member to thus reduce the tendency of the wiper blade to lift from the surface to be cleaned.

Whilst the known attempts to reduce the tendency of a wiper blade to lift from the surface have been partly successful they substantially increase the cost of the overall wiper. They are also generally of a cumbersome nature. They generally increase the forces on the wiper arm and as most wiper arms have not been specifically designed for such an attachment the arm

GD

2

is susceptible to breakage. They are also not suitable for wipers which, when in use, are designed to recess away from the surface to be wiped.

The present invention seeks to alleviate one or more of the above problems associated with automated wipers by providing an improved wiper blade refill assembly, alternatively referred to herein as a wiper refill, which comprises:

i) at least two blade members coacting in such a way that, in use, the tendency of the blade members to lift from the surface is reduced, and

ii) a backing member supporting the two blade members and by means of which the blade members may be mounted on a wiper arm.

Preferably the two blade members are positioned adjacent and parallel to one another so that when in use there is defined a tubular space or void between adjacent blade members and the surface to be wiped. The tubular space or void is such that when the wiper refill is used, the pressure within the tubular space or void will be lower than the pressure outside of the tubular space or void. Thus a vacuum effect within the tubular space or void is created and the tendency of the blade members to lift from the surface being wiped is reduced.

Each blade member of the wiper refill may include a flared section and a base section.

The flared section may include a top section and a bottom section.

The top section of each flared section may include a top face, a bottom face, and two opposing side walls.

The top face may be adapted to contact the surface to be wiped. The top face may include two opposing side edges and be of indefinite length. The two opposing side edges may include an inner edge which is adjacent to an inner edge of the top face of another blade member and an opposing outer edge. The top face may also be substantially flat.

The two opposing side walls of each flared section may include an inner wall which is adjacent to the inner wall of another flared section. The opposing wall of each flared section may be an outside wall.

The inner wall may depend from the inner edge of the top face. The inner wall may generally diverge downwardly from —————————

the inner edge of the top face. The inner wall may extend along the entire length of the inner edge of the top face.

The inner wall may include a first section and a second section. The first section of the inner wall may depend from the inner edge of the top face. The first section may extend substantially perpendicular to the top face. The second section of the inner wall may generally diverge downwardly from said first section. The second section may include an upper and lower section. The upper section may diverge downwardly at a particular angle. The lower section may diverge downwardly at a greater angle.

The lower edge of the second section may be juxtaposed to the lower edge of the second section of the adjacent blade member. The distance between the lower edges of the second sections between adjacent blade members may be up to 1.5 mm. The distance between the lower edges of the second sections between adjacent blade members may range from 0.25 mm to 1.5 mm.

The distance between the lower edges of the second sections of adjacent flare sections may be 0 mm. The lower edges of the second sections of adjacent flare sections may be integral.

It will be understood, thus, that when the wiper refill is used there is defined a tubular space or void between adjacent flare sections and the surface to be wiped.

The outer wall of the top section may depend from the outer edge of the top face. The outer wall may generally diverge downwardly from the outer edge of the top face. The outer wall may be a mirror image of the inner wall.

The bottom face of the top section may be adapted to be connected to the bottom section of the flare section. The bottom face may include four sections. These sections may collectively extend from the lower edge of the inner wall of the top section to the lower edge of the outer wall of the top section. The first section may extend inwardly from the lower edge of the inner wall. The first section may be substantially horizontal. The second section may extend from the inner edge of the first section and be upwardly diverging. The second section may extend to the central axis of the flare section. The third and fourth sections may be mirror images of the second and first sections respectively.

The bottom section of each flare section may be adapted to attach the flare section to the base section. The bottom section of the flare section may have a substantially rectangular cross-section. The bottom section of the flare section may have a substantially square or rectangular cross-section. The bottom section of the flare section may extend vertically downward from the bottom face of the top section. The bottom section of the flare section may extend from the centre of the bottom face of the top section of the flare section to the base section. The bottom section may also generally extend along the entire length of the flare section.

The base section may be adapted to attach the blade members to the backing member. The base section may include at least one attachment means adapted to be attachable to the backing member. The base section may include the same number of attachment means as the number of flare sections.

Each attachment means may be of any suitable form. Each attachment means may be the same or different. It will be understood that the physical parameters, such as shape and size of the attachment means will be dictated by the particular design of the backing member that the attachment means is to be attached to.

Each attachment means may be of indefinite length. Each attachment means may be of any suitable cross-section. Each attachment means may be of a generally semi-circular or square cross-section.

If, for example, the section of the backing member designed to attach to the attachment means includes an elongated void section then the attachment means preferably includes a complimentary protruding member. If the cross-section of the void is semi-circular or square then the cross-section of the protruding member may be of a semi-circular or square cross-section respectively.

Alternatively, if the section of the backing member designed to attach to the attachment means includes an elongated section to be inserted into the attachment means, then the attachment means preferably includes an elongated section with a complimentary slot to receive the arm member section to be

GD

inserted.

Alternatively, if the section of the arm member designed to attach to the attachment means includes two elongated void sections then the attachment means preferably includes two complimentary protruding members. If the cross-section of the voids are semi-circular or square then the cross-section of the protruding members are preferably semi-circular or square respectively.

The base section may also include an upper section adapted to connect the attachment means to each of the flare sections.

The upper section may be substantially rectangular in cross-section. The upper section may include a top face, a bottom face, and two opposing side walls.

The top face of the upper section may be adapted to connect to each of the flare sections. The top face may be substantially flat. The top face may include two opposing side edges and be of indefinite length. The bottom face of the upper section may be substantially flat. The bottom face may include two opposing side edges and be of indefinite length. The bottom face may be narrower than the top face.

The side walls of the upper section may extend from the edges of the top face to the edges of the bottom face. The side walls may be substantially vertical. The side walls may diverge. The side walls may include two sections. The first section may depend from the edges of the top face and extend generally vertically downward. The second section may depend from the first section and extend divergently downward.

The upper section may consist of at least two adjacent sections. The number of adjacent sections may be the same as the number of flare sections. Alternatively, the number of adjacent sections may be the same as the number of attachment means. Each adjacent section may connect to one flare section and one attachment means. Each adjacent section may be substantially square or rectangular in cross-section. The adjacent sections may be separate or integral.

The base section may further include a connecting web portion between the upper section and each attachment means. The connecting web portions may be substantially rectangular.

GD

6

The connecting web portions may be substantially square. The connecting web portions may also be of indefinite length. The width of the connecting web portions may be narrower than the width of each attachment means. The width of the connecting web portions may be narrower than the width of the upper section. The connecting web portions may be of indefinite length.

The wiper refill may be made from any suitable material or mixture of materials. Examples of suitable materials include rubber, plastics and silicon. The blade members of the wiper refill may be made from a flexible material adapted such that when the wiper refill is used the shape of the blade member may distort due to the pressure difference within the tubular space or void yet will allow the shape of the blade member to return to its original shape when wiper blade is not in use. The backing member may be made from a relatively stiff plastics material.

The wiper blade may be manufactured by any suitable method. The method of manufacture will necessarily be dictated by the material from which the blade members and backing members are made.

The flare sections and base sections of the blade members may be integral. The blade members may be manufactured in indefinite lengths and subsequently divided into suitable lengths for use depending upon the particular backing member to be connected to.

The invention shall now be described with reference to the accompanying drawings.

Figure 1 of the drawings illustrates a perspective view of a blade member of indefinite length in accordance with the present invention.

Figure 2 of the drawings is a typical cross-sectional view of Figure 1.

Figure 3 of the drawings illustrates a perspective view of two blade members of indefinite length in accordance with the present invention.

Figure 4 of the drawings is a typical cross-sectional view of Figure 3.

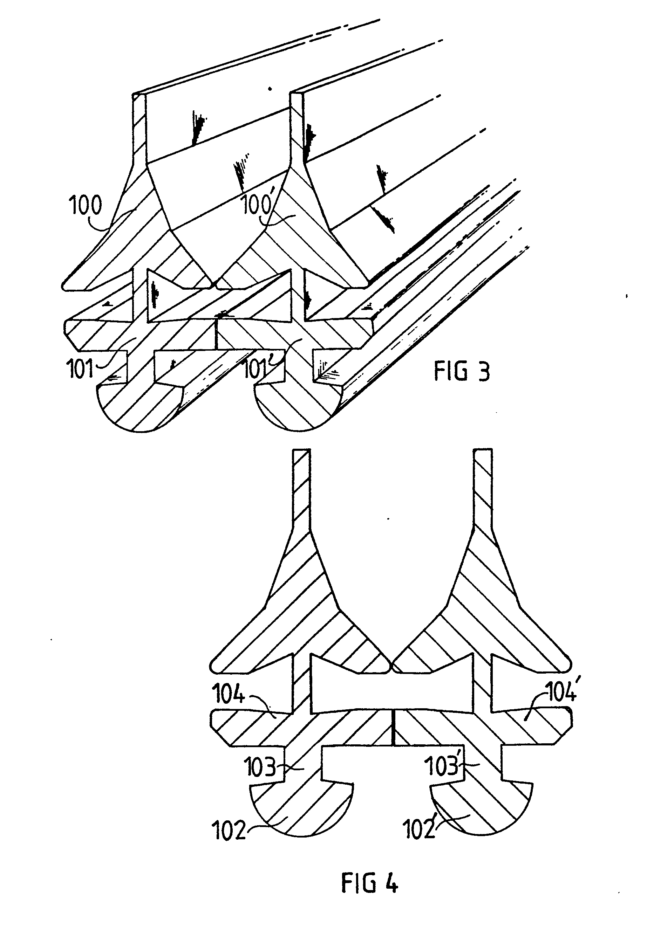

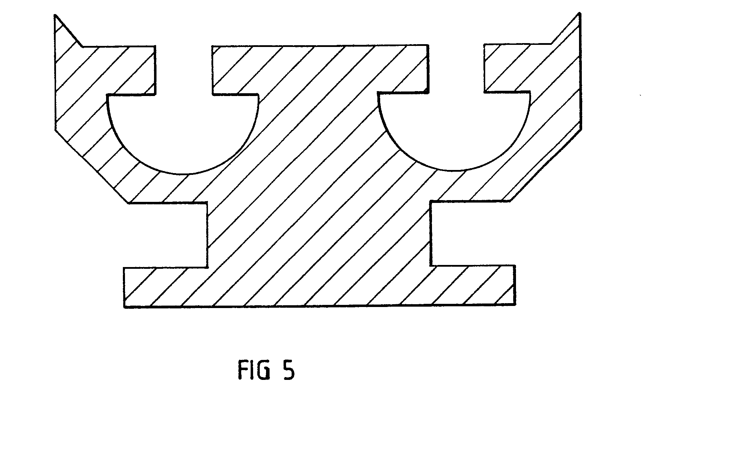

Figure 5 of the drawings illustrates a cross-sectional view of a backing section in accordance with the present

GD

invention suitable to receive the blade members illustrated in Figures 3 and 4.

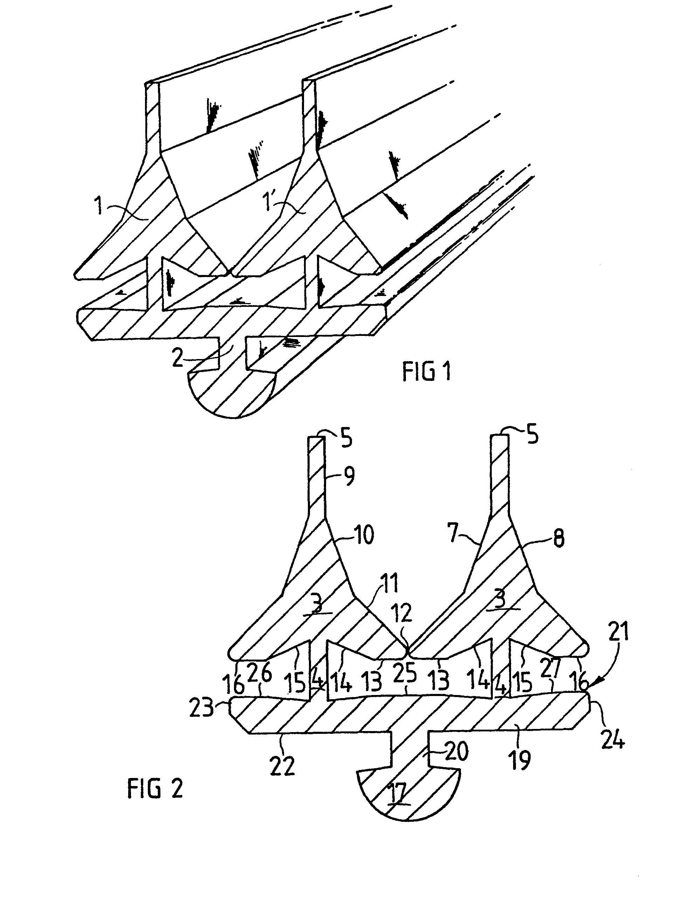

The blade member in Figure 1 and Figure 2 of the drawings illustrates a wiper blade including a first flare section 1, a second flare section 1' and a base section 2.

Flare section 1 and flare section 1' are identical.

Each flare section includes a top section 3 and a bottom section 4. The top section includes a top face 5, a bottom face 6, an inner wall 7 and an outer wall 8. The outer wall 8 is a mirror image of the inner wall 7.

The inner wall 7 includes a first section 9 extending downwardly from the inner edge of the top face. The first section is substantially perpendicular to the top face.

The inner wall 7 further includes a second section having an upper portion 10 and a lower portion 11. The upper portion 10 extends divergingly downwards from the first section 9 at a particular angle. The lower portion 11 extends divergingly downwards from the upper section 10. The angle of divergence of the lower section 11 is greater than the angle of divergence of the upper section 10.

The bottom edge 12 of the inner wall is juxtaposed to the bottom edge of the inner wall of the adjacent blade member. Thereby a wiper refill including the blade member, when in use will define an aperture between adjacent flare sections and the surface to be wiped.

The bottom face 6, includes four sections. The first section 13 extends inwardly from edge 12 in a substantially horizontal direction. The second section 14 extends inwardly from the first section in a substantially upward divergence.

The third section 15 and the fourth section 16 are mirror images of the second section 14 and first section 13 respectively.

The bottom section 4 of each flare section is substantially rectangular and connects the flare section to the base section 2.

The base section 2 includes an attachment member 17 and an upper section 18.

The attachment member 17 is of a substantially semi-circular cross-section and is of indefinite length.

GD

8

The upper section 19 includes a top face 21, a bottom face 22 and two opposing side walls 23 and 24. The top face 21 includes a central section 25 and two outer sections 26 and 27.

The central section 25 is of a generally concave shape. In particular the central section includes a substantially horizontal middle portion which extends substantially along underneath sections 13 of the flare sections. The central section also includes two slightly outwardly and downwardly extending portions on either side of the middle portion to the bottom section of the flare sections 4. These portions extend substantially underneath sections 14 of the flare sections.

The outer sections 26 and 27 may be substantially horizontal. Sections 26 and 27 may also include a first portion which extends inwardly from the outside edge of the base member and is substantially horizontal. These sections extend substantially underneath sections 16 of the flare sections. Sections 26 and 27 may also include a second portion which extends inwardly and downwardly from the first portion to the bottom section of the flare sections 4. These sections extend substantially underneath sections 15 of the flare sections.

The bottom face 22 of the upper section is substantially horizontal.

The side walls 23 and 24 include an upper section and a lower section. The upper section of each wall extends vertically downwards from an edge of the top face 21. The lower section extends converging downwards from each upper section to an edge of the bottom face 22.

The base section also comprises a web portion 20 to connect the attachment member 17 to the upper section 19.

In Figures 3 and 4 the blade members are very similar to the blade member illustrated in Figures 1 and 2. The blade sections 100 and 100' are identical to the blade sections of Figures 1 and 2. However, in Figures 3 and 4 there is provided two adjacent base sections 101 and 101' wherein each base section includes a separate attachment means 102 and 102' and a separate connecting web portion 103 and 103' and separate adjacent upper sections 104 and 104'.

Wiper refills as illustrated in the drawings have been produced and a series of standard experiments have been

GD

performed. It has been surprisingly discovered that if such a wiper blade is connected to an ordinary wiper arm then the tendency of the wiper to lift from the surface to be wiped is reduced.

Finally it is to be understood that various other modifications and/or alterations may be made without departing from the scope of the present invention as outlined herein.

GD

10

## CLAIMS

1.   A wiper blade refill assembly comprising a plurality of wiper blade members (1, 1') mounted on a backing member (Fig. 5) by means of which the blade assembly may be mounted on a wiper arm and moved thereby across a surface to be wiped with said blade members (1, 1') in contact with said surface, characterised in that the two blade members (1, 1') coact in such a way that, in use, the tendency of the blade members to lift off the surface is reduced.

2.   A wiper blade refill assembly according to claim 1, characterised in that the two blade members (1, 1') are mounted on said backing member parallel one with the other and, in use, define a substantially enclosed tubular space or void between the adjacent blade members and the said surface.

3.   A wiper blade refill assembly according to claim 1 or 2, characterised in that each blade member comprises a flared section (1) integrally connected to a base section (2) by means of which the assembly is connected to said backing member.

4.   A wiper blade refill assembly according to claim 3, characterised in that the flared section of each blade member (1, 1') includes:

   i)   a top section (3) having a top face (5) which, in use, contacts the surface to be wiped, said top face including two opposing side edges; two opposing downwardly and outwardly divergent side walls (7, 8) extending downwardly from the side edges of the top face (5); and a bottom face (6) connecting the bottom edges of the side walls (7, 8); and

   ii)   a bottom web (4) connecting the top section (3) to the base section (2).

5.   A wiper blade refill assembly according to claim 4, charcterised in that the divergent side walls (7, 8) of each blade member are mirror images.

6.    A wiper blade refill assembly according to claim 4 or 5, characterised in that the opposite side walls of each flared member (1, 1') comprise a top section (9) extending perpendicularly downward from the top face (5), and an outwardly and downwardly divergent bottom section (10, 11).

7.    A wiper blade refill assembly according to claim 6, characterised in that the outwardly and downwardly divergent bottom section of each side wall (7, 8) is formed in two sections (10, 11), the upper section (10) diverging at a given angle and the lower section (11) diverging at a greater angle.

8.    A wiper blade refill assembly according to any one of claims 3 to 7, characterised in that the opposed bottom edges of the flared blade members are substantially contiguous with little or no gap therebetween.

9.    A wiper blade refill assembly according to claim 8, characterised in that said gap is 1.5 mm or less.

10.    A wiper blade refill assembly according to claim 9, characterised in that said gap is from 0.25 to 1.5 mm.

11.    A wiper blade refill assembly according to any one of claims 3 to 10, characterised in that the base section (2) comprises at least one attachment means (17) for connecting the blade member(s) to the backing member and an upper section (19) connecting the flared sections of the blade members to the attachment means.

12.    A wiper blade refill assembly according to claim 11, characterised in that the attachment means (17) comprise an elongated member of a generally square or semi-circular cross-section securable to the backing member, and a web (20) connecting the attachment means to the flared section (3) of each blade member.

13.    A wiper blade refill assembly according to any one of claims 3-10, characterised in that that the two blade members (1, 1') are integrally connected in parallel to a common integral base section (2).

14. A wiper blade refill assembly according to claim 11 or 12, characterised in that the upper section (19) of the base section (2) comprises at least two adjacent sections (101, 101'), one connected to each of the two blade members (100, 100').

15. A wiper blade refill assembly according to claim 14, characterised in that the adjacent sections (101, 101') are each provided with their own means of attachment (102, 102') to the backing member.

16. An automatic wiper for a motor vehicle windscreen, comprising a motor, an arm member driven by the motor, and a wiper blade refill assembly according to any one of claims 1 to 15 mounted on the arm member.

FIG 1

FIG 2

100

100'

101

101'

FIG 3

104

104'

103

103'

102

102'

FIG 4

FIG 5